# FASCICULE DE BREVET EUROPEEN

(11) **EP 4 222 833 B1**
(45) Date de publication et mention de la délivrance du brevet: **26.08.2026**
(21) Numéro de dépôt: 21773125.6
(22) Date de dépôt: 20.09.2021
(51) Int. Cl.: H02J 7/00, H02J 1/08, H01M 10/42, B60L 58/19, B60L 58/22, H01M 50/502, H01M 50/519, H01M 50/20

(54) **SYSTEME DYNAMIQUE D'EQUILIBRAGE DE TENSION DE CHARGE DE MODULES DE BATTERIE**
DYNAMISCHES SYSTEM ZUM AUSGLEICH DER LADESPANNUNG FÜR BATTERIEMODULE
DYNAMIC SYSTEM FOR BALANCING CHARGING VOLTAGE FOR BATTERY MODULES

(30) Priorité: 02.10.2020 FR 2010085
(43) Date de publication de la demande: 09.08.2023
(73) Titulaire: Ampere SAS, 92100 Boulogne-Billancourt (FR)
(72) Inventeur: AIT EL BACHA, Abdeslam, 94700 Maisons-Alfort (FR); MAUDUIT, Jean-Roch, 78084 Guyancourt Cedex (FR)
(74) Mandataire: Renault Group
(86) Numéro de dépôt international: PCT/EP2021/075784
(87) Numéro de publication internationale: WO 2022/069277

(56) Documents cités:
- CN-A- 111 431 227
- JP-A- 2019 080 473
- US-A1- 2012 212 182
- US-A1- 2018 062 402
- US-A1- 2020 185 936

## Description

### DOMAINE TECHNIQUE DE L'INVENTION

La présente invention concerne de manière générale les batteries de stockage d'énergie électrique.

Elle concerne plus particulièrement une batterie de stockage d'énergie électrique comportant :
- une pluralité de modules de batterie connectés électriquement par un circuit électrique, chaque module de batterie étant adapté à stocker de l'énergie électrique,
   et
- une unité de commutation qui comprend une pluralité de commutateurs disposés sur le circuit électrique et adaptés à connecter les modules de batterie en série dans le circuit électrique lors d'une phase de charge de la batterie par un chargeur.

L'invention trouve une application avantageuse dans une batterie pour véhicule de transport terrestre, fluvial ou aérien, en particulier pour véhicule électrique. Elle est particulièrement adaptée à être rechargée de manière rapide, sous une tension supérieure à la tension nominale qu'elle délivre pour alimenter en énergie électrique les organes du véhicule.

Elle concerne également un procédé de commande d'une telle batterie pour piloter l'ouverture et la fermeture de commutateurs de l'unité de commutation, en particulier en fonction des phases de charge ou de décharge de la batterie.

### ETAT DE LA TECHNIQUE

Afin de réduire le temps nécessaire à la charge d'une batterie de stockage d'énergie électrique, il convient d'accroître sa puissance de charge. Pour ce faire, il est préférable d'augmenter la tension de charge à ses bornes plutôt que d'augmenter le courant de charge qui y circule.

Cependant, l'augmentation de la tension de charge de la batterie n'est pas compatible avec la tension de fonctionnement des organes du véhicule que la batterie doit alimenter en énergie électrique, tels que le système de climatisation et de chauffage, la radio, les ventilateurs ou encore les onduleurs.

On connaît une première solution, très onéreuse, qui consiste à transformer les organes du véhicule pour que leur tension de fonctionnement soit égale à la tension de charge.

On connaît du document US20180062402 une deuxième solution, qui consiste à charger la batterie sous une tension de charge plus élevée que la tension de fonctionnement des organes du véhicule. Pour ce faire, la batterie est scindée en modules de batterie, lesquels sont connectés électriquement entre eux en série lors d'une phase de charge de la batterie à haute tension. Lors d'une phase de décharge de la batterie, un seul module de batterie alimente les organes du véhicule en énergie électrique, la tension délivrée par ce module de batterie étant compatible avec la tension de fonctionnement desdits organes du véhicule. Une fois que ce module de batterie a atteint une baisse de charge choisie, un autre module de batterie prend le relais pour alimenter les organes.
Cette deuxième solution ne permet cependant pas d'utiliser la batterie pour alimenter les organes du véhicule lorsque la batterie est en charge.

### PRESENTATION DE L'INVENTION

Afin de remédier à l'inconvénient précité de l'état de la technique, la présente invention propose une batterie de stockage d'énergie électrique qui peut alimenter électriquement, sous une première tension, un circuit consommateur d'énergie électrique d'un véhicule, et être, simultanément, rechargée sous une deuxième tension supérieure à ladite première tension.

Plus particulièrement, on propose selon l'invention une batterie telle que définie dans l'introduction, dans laquelle l'unité de commutation comprend en outre un système d'équilibrage de la charge des modules de batterie, disposé sur le circuit électrique et adapté à modifier le circuit électrique pour dévier une partie du courant délivré en direction d'un des modules de batterie en surcharge vers un autre des modules de batterie en sous-charge, lors d'une phase mixte au cours de laquelle la batterie est simultanément chargée par le chargeur et déchargée vers un circuit consommateur que ladite batterie alimente en énergie électrique.

Ainsi, grâce à l'invention, il est possible, simultanément, d'utiliser la batterie et de la recharger de manière rapide, sans endommager la batterie ni les organes du véhicule qu'elle alimente via le circuit consommateur.

Plus particulièrement, le système d'équilibrage de la batterie permet un équilibrage dynamique du niveau de charge de chaque module de batterie. Ce système d'équilibrage garantit que les tensions des modules de batterie sont toujours au même niveau de charge, à un écart près maîtrisé, et ceci jusqu'à la fin de la charge complète de la batterie. L'équilibrage des modules de batterie est assuré même si l'un des modules de batterie est sollicité pour délivrer de l'énergie électrique au circuit consommateur lors de la charge de la batterie. Deux modules de batterie sont au « même niveau de charge » lorsqu'ils délivrent entre leurs bornes respectives une tension d'alimentation identique (audit écart près maîtrisé).

D'autres caractéristiques avantageuses et non limitatives de la batterie conforme à l'invention, prises individuellement ou selon toutes les combinaisons techniquement possibles, sont les suivantes :
- les commutateurs de l'unité de commutation sont adaptés à connecter, lors de la phase mixte, les modules de batterie en série sur le circuit électrique tout en connectant le circuit consommateur aux bornes d'au moins un des modules de batterie, de préférence aux bornes d'un seul module de batterie ;
- les commutateurs de l'unité de commutation sont en outre adaptés à connecter lesdits modules de batterie en parallèle dans le circuit électrique lors d'une phase de décharge de la batterie dans le circuit consommateur, et le système d'équilibrage est adapté à modifier le circuit électrique pour dévier une partie du courant délivré en direction d'un des modules de batterie en surcharge vers un autre des module de batterie en sous charge lors d'une phase transitoire entre ladite phase de charge et ladite phase de décharge de la batterie ;
- le système d'équilibrage comporte au moins une unité d'équilibrage principale disposée en dérivation d'une partie d'une branche du circuit électrique reliant les deux bornes positives de deux modules de batterie distincts, ladite unité d'équilibrage principale comportant un commutateur monté en série avec une bobine et en parallèle avec une diode (qui protège ledit commutateur d'une éventuelle surtension) ;
- la durée de fermeture du commutateur de ladite unité d'équilibrage principale est pilotée par une modulation en largeur d'impulsion, en fonction de la tension aux bornes des modules de batterie à équilibrer et du courant de charge provenant du chargeur ;
- le système d'équilibrage comporte au moins une unité d'équilibrage secondaire disposée en dérivation d'une partie d'une branche du circuit électrique reliant les deux bornes négatives desdits deux modules de batterie distincts, et comportant un commutateur monté en série avec une bobine et en parallèle avec une diode (qui protège ledit commutateur d'une éventuelle surtension) ;
- le commutateur de chaque unité d'équilibrage principale et secondaire est un transistor de puissance ;
- il est prévu un premier module de batterie dont une borne négative est connectée à une borne positive d'un deuxième module de batterie par l'intermédiaire d'une première et d'une deuxième diodes connectées en série l'une de l'autre, la borne d'entrée de courant de la première diode étant connectée à la borne négative du premier module de batterie, et la borne de sortie de courant de la deuxième diode étant connectée à la borne positive du deuxième module de batterie ;
- il est prévu que l'unité de commutation comporte :
   un premier commutateur présentant un premier point de contact destiné à être connecté à une borne positive du chargeur et un deuxième point de contact connecté à la borne positive du premier module de batterie,
   un deuxième commutateur présentant un premier point de contact destiné à être connecté à une borne négative du chargeur et un deuxième point de contact connecté à la borne négative du deuxième module de batterie,
   un troisième commutateur présentant un premier point de contact connecté à la borne positive du deuxième module de batterie et un deuxième point de contact connecté à une borne du circuit consommateur,
   un quatrième commutateur présentant un premier point de contact connecté à la borne négative du deuxième module de batterie et un deuxième point de contact connecté à l'autre borne du circuit consommateur,
   un cinquième commutateur présentant un premier point de contact connecté à la borne positive du premier module de batterie et un deuxième point de contact connecté à la borne de sortie de courant de la deuxième diode,
   un sixième commutateur présentant un premier point de contact connecté à la borne négative du deuxième module de batterie et un deuxième point de contact connecté à la borne d'entrée de courant de la première diode ,
   il est prévu que l'unité d'équilibrage principale du système d'équilibrage est disposée sur la branche électrique connectant la borne positive du premier module de batterie et la borne d'entrée de courant dans la deuxième diode, la borne d'entrée de courant de la diode de ladite unité d'équilibrage principale étant connectée à la borne de sortie de courant de la première diode ;
- l'unité d'équilibrage secondaire du système d'équilibrage est disposée sur la branche électrique connectant la borne négative du deuxième module de batterie et la borne d'entrée de courant de la deuxième diode, la borne de sortie de courant de la diode de ladite unité d'équilibrage secondaire étant connectée à la borne de sortie de courant de la première diode.

L'invention propose également un procédé de commande d'une batterie comportant une pluralité de modules de batterie connectés électriquement dans un circuit électrique au moyen d'une unité de commutation qui comprend une pluralité de commutateurs ainsi qu'un système d'équilibrage de la charge desdits modules de batterie, selon lequel il est prévu qu'une unité de commande:
- pilote les commutateurs de l'unité de commutation pour connecter lesdits modules de batterie en série les uns avec les autres, lors d'une phase de charge de ladite batterie par un chargeur ;et
- pilote le système d'équilibrage de l'unité de commutation pour dévier une partie du courant délivré en direction d'un des modules de batterie en surcharge vers un autre des modules de batterie en sous charge, lors d'une phase mixte au cours de laquelle la batterie est simultanément chargée par le chargeur et déchargée vers ledit circuit consommateur.
D'autres caractéristiques avantageuses et non limitatives du procédé conforme à l'invention, prises individuellement ou selon toutes les combinaisons techniquement possibles, sont les suivantes :
- l'unité de commande pilote lesdits commutateurs de l'unité de commutation pour connecter lesdits modules de batterie en série tout en connectant le circuit consommateur aux bornes d'au moins un des modules de batterie lors de ladite phase mixte, et,
- l'unité de commande pilote lesdits commutateurs de l'unité de commutation pour connecter lesdits modules de batterie en parallèle les uns des autres, lors d'une phase de décharge de la batterie vers un circuit consommateur qu'elle alimente en énergie électrique.
Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### DESCRIPTION DETAILLEE DE L'INVENTION

La description qui va suivre en regard des dessins annexés, donnés à titre d'exemples non limitatifs, fera bien comprendre en quoi consiste l'invention et comment elle peut être réalisée.

Sur les dessins annexés :
[Fig. 1] représente un schéma électrique d'une batterie selon l'invention ; et,
[Fig. 2] est un diagramme représentant les étapes principales d'un procédé de commande selon l'invention.

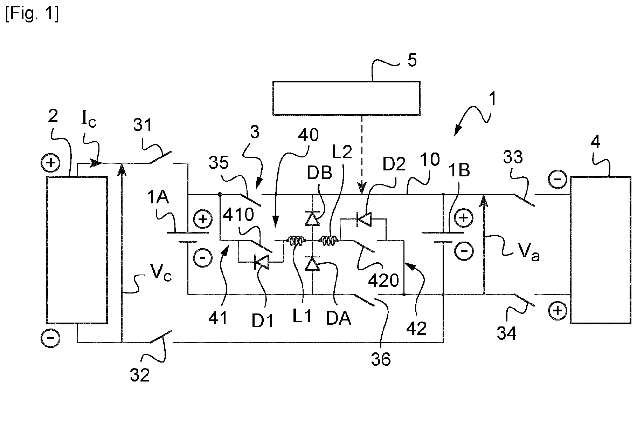

Sur la figure 1, on a représenté le schéma électrique d'un exemple de batterie 1 selon l'invention.

La batterie 1 est embarquée dans un véhicule (non représenté), par exemple dans un véhicule électrique ou dans un véhicule hybride.

La batterie 1 est adaptée à stocker de l'énergie électrique et à la restituer le moment voulu en délivrant tout ou partie de cette énergie électrique stockée à un circuit consommateur 4 interne au véhicule, sur lequel sont raccordés différents organes du véhicule tels que le système de climatisation et de chauffage, la radio, les ventilateurs ou encore les onduleurs. La batterie 1 est capable de délivrer au circuit consommateur 4 une tension d'alimentation Va nominale, ici de l'ordre de 400 Volts. Pour stocker l'énergie électrique, la batterie 1 est adaptée à être chargée (ou rechargée selon le langage courant) au moyen d'un chargeur 2 externe qui délivre un courant de charge Ic et une tension de charge Vc. Le chargeur 2 est connu en soi. Il s'agit par exemple d'une station de recharge publique ou privée prévue dans la rue, dans une station essence, dans un parking, etc.

Pour que la charge de la batterie soit rapide, la tension de charge Vc délivrée par le chargeur 2 à la batterie est largement supérieure à la tension d'alimentation Va que délivre la batterie 1 au circuit consommateur 4. Par exemple, la tension de charge Vc est égale au double de la tension d'alimentation Va. Ici, la tension de charge Vc est de l'ordre de 800 Volts.

Pour permettre à la batterie 1 d'être chargée sous une tension de charge Vc supérieure à la tension d'alimentation Va qu'elle délivre ensuite au circuit consommateur 4, la batterie 1 comporte une pluralité de modules de batterie 1A, 1B connectés électriquement entre eux par un circuit électrique 10 qui peut adopter différentes configurations.

Chaque module de batterie 1A, 1B est adapté à stocker de l'énergie électrique dans la mesure où il comporte une pluralité de cellules électrochimiques (non représentées) dans lesquelles est stockée ladite énergie électrique. Les modules de batteries 1A, 1B sont par exemple des batteries lithium-ion.

Ici, tous les modules de batterie 1A, 1B sont dimensionnés pour délivrer la même tension nominale d'alimentation Va entre leurs bornes positive et négative respectives. Pour ce faire, les modules de batterie 1A, 1B comportent tous le même nombre de cellules électrochimiques présentant la même capacité de stockage, connectées en série les unes des autres au sein d'un même module de batterie 1A, 1B.

Dans l'exemple de la figure 1, la batterie 1 comporte un premier module de batterie 1A et un deuxième module de batterie 1B, chacun dimensionné pour délivrer une tension d'alimentation Va nominale de l'ordre de 400 Volts.

Dans cet exemple, le circuit électrique 10 relie la borne négative du premier module de batterie 1A à la borne positive du deuxième module de batterie 1B par l'intermédiaire d'une première diode DA et d'une deuxième diode DB. Les première et deuxième diodes DA et DB sont connectées en série l'une de l'autre, de sorte que la borne d'entrée de courant de la première diode DA est connectée à la borne négative du premier module de batterie 1A tandis que la borne de sortie de courant de la deuxième diode DB est connectée à la borne positive du deuxième module de batterie 1B.

Une diode laisse classiquement passer le courant dans un seul sens de circulation dans la branche électrique sur laquelle elle est montée. Par convention, on appelle donc « borne d'entrée de courant de la diode » la borne par laquelle entre le courant dans ladite diode, et « borne de sortie de courant de la diode », la borne par laquelle ressort le courant après avoir traversé la diode.

Pour permettre de connecter électriquement les modules de batterie 1A, 1B dans le circuit électrique 10 selon différentes configurations, la batterie 1 comporte une unité de commutation 3 comprenant une pluralité de commutateurs 31, 32, 33, 34, 35, 36 disposés sur le circuit électrique 10.

Dans l'exemple de la figure 1, l'unité de commutation 3 comporte :
- un premier commutateur 31 présentant un premier point de contact destiné à être connecté à la borne positive du chargeur 2 et un deuxième point de contact connecté à la borne positive du premier module de batterie 1A,
- un deuxième commutateur 32 présentant un premier point de contact destiné à être connecté à la borne négative du chargeur 2 et un deuxième point de contact connecté à la borne négative du deuxième module de batterie 1B,
- un troisième commutateur 33 présentant un premier point de contact connecté à la borne positive du deuxième module de batterie 1B et un deuxième point de contact connecté à une borne (ici la borne négative) du circuit consommateur 4,
- un quatrième commutateur 34 présentant un premier point de contact connecté à la borne négative du deuxième module de batterie 1B et un deuxième point de contact connecté à l'autre borne (ici la borne positive) du circuit consommateur 4,
- un cinquième commutateur 35 présentant un premier point de contact connecté à la borne positive du premier module de batterie 1A et un deuxième point de contact connecté à la borne de sortie de courant de la deuxième diode DB,
- un sixième commutateur 36 présentant un premier point de contact connecté à la borne négative du deuxième module de batterie 1B et un deuxième point de contact connecté à la borne d'entrée de courant de la première diode DA.

Grâce à l'ouverture et/ou à la fermeture de chacun des commutateurs 31, 32, 33, 34, 35, 36 de l'unité de commutation 3, le circuit électrique 10 est modulable pour adopter des configurations distinctes qui correspondent à chaque phase de fonctionnement de la batterie 1. Il est notamment prévu une configuration du circuit électrique 10 pour une phase de charge de la batterie 1 par le chargeur 2, et une autre configuration du circuit électrique 10 pour une phase de décharge de la batterie 1 dans le circuit consommateur 4.

En pratique, l'ouverture et la fermeture des commutateurs 31, 32, 33, 34, 35, 36 de l'unité de commutation 3, sont pilotées par une unité de commande 5 en fonction de la phase de fonctionnement de la batterie 1. Autrement dit, l'unité de commande 5 est adaptée à piloter (synonyme de commander) l'unité de commutation 3 pour transformer le circuit électrique 10 selon les différentes configurations qu'il est susceptible d'adopter.

L'unité de commande 5 peut être intégrée à la batterie 1 ou déportée de ladite batterie 1. L'unité de commande 5 comporte par exemple un circuit électronique avec un micro-processeur qui inclut une unité centrale (acronyme CPU pour *« Central Processing Unit »* en anglais), une mémoire vive et/ou morte stockant des informations, et une interface pour communiquer avec la batterie 1. La mémoire vive et/ou morte stocke notamment des informations sur le circuit électrique 10, sur les tensions d'alimentation détectées Va aux bornes de chacun des modules de batterie 1A, 1B, sur le courant de charge Ic et la tension de charge Vc délivrés par le chargeur 2.

Lors d'une phase de charge de la batterie 1 par le chargeur 2, les commutateurs 31, 32, 33, 34, 35, 36 de l'unité de commutation 3 sont pilotés pour connecter la borne positive de la batterie 1 à la borne positive du chargeur 2 et la borne négative de la batterie 1 à la borne négative du chargeur 2. Lors de la phase de charge de la batterie 1, les commutateurs 31, 32, 33, 34, 35, 36 sont en outre pilotés pour connecter les modules de batterie 1A, 1B en série dans le circuit électrique 10.

Dans l'exemple de la figure 1, lors de la phase de charge de la batterie 1, les premier et deuxième commutateurs 31, 32 sont donc fermés, tandis que les troisième, quatrième, cinquième et sixième commutateurs 34, 35, 36, 37 sont ouverts.

Au contraire, lors d'une phase de décharge de la batterie 1 dans le circuit consommateur 4 du véhicule, les commutateurs 31, 32, 33, 34, 35, 36 sont pilotés pour connecter la borne positive de la batterie 1 à la borne négative du circuit consommateur 4, et la borne négative de la batterie 1 à la borne positive du circuit consommateur 4. Lors de la phase de décharge de la batterie 1, les commutateurs 31, 32, 33, 34, 35, 36 sont aussi pilotés pour connecter les modules de batterie 1A, 1B en parallèle dans le circuit électrique 10.

Dans l'exemple de la figure 1, lors de la phase de décharge de la batterie 1, les troisième, quatrième, cinquième et sixième commutateurs 33, 34, 35, 36 sont donc fermés, tandis que les premier et deuxième commutateurs 31, 32 sont ouverts.

La batterie 1 selon l'invention est en outre adaptée à fonctionner selon une phase mixte au cours de laquelle la batterie 1 est simultanément chargée par le chargeur 2, sous la tension de charge Vc, et déchargée vers le circuit consommateur 4 qu'elle alimente sous la tension d'alimentation Va.

Une telle phase mixte de fonctionnement de la batterie 1 permet donc à un utilisateur du véhicule de recharger la batterie 1 tout en utilisant un des organes du véhicule, par exemple le système de climatisation ou la radio.

Lors de la phase mixte de fonctionnement, les commutateurs 31, 32, 33, 34, 35, 36 de l'unité de commutation 3 sont pilotés pour connecter la borne positive de la batterie 1 à la borne positive du chargeur 2 et la borne négative de la batterie 1 à la borne négative du chargeur 2. Lors de la phase mixte de fonctionnement, les commutateurs 31, 32, 33, 34, 35, 36 sont en outre pilotés pour connecter les modules de batterie 1A, 1B en série sur le circuit électrique 10 tout en connectant le circuit consommateur 4 aux bornes d'au moins un des modules de batterie 1A, 1B (la borne positive d'un des modules de batterie 1A, 1B à la borne positive du circuit consommateur 4 et la borne négative dudit au moins module de batterie 1A, 1B à la borne négative du circuit consommateur 4).

Dans l'exemple de la figure 1, lors d'une phase mixte de fonctionnement de la batterie 1, les premier, deuxième, troisième et quatrième commutateurs 31, 32, 33, 34 sont donc fermés, tandis que les cinquième et sixième commutateurs 35, 36 sont ouverts. Le circuit consommateur 4 est alors connecté électriquement aux bornes du seul deuxième module de batterie 1B.

De manière remarquable, l'unité de commutation 3 comprend en outre un système d'équilibrage 40 qui est chargé d'équilibrer dynamiquement la charge des modules de batterie 1A, 1B, tout particulièrement lorsque lesdits modules de batterie 1A, 1B sont simultanément chargés et déchargés. Le système d'équilibrage 40 permet notamment de préserver les composants du circuit électrique 10 et les organes du véhicule raccordés sur le circuit consommateur 4, lors de la phase mixte de fonctionnement de la batterie 1.

Le système d'équilibrage 40 est disposé sur le circuit électrique 10 et adapté à modifier ce dernier pour dévier une partie du courant qui est délivré en direction d'un des modules de batterie 1A, 1B en surcharge vers un autre des modules de batterie 1A, 1B en sous-charge. Ainsi, une partie du courant, destiné à alimenter un des modules de batterie 1A, 1B lorsqu'aucun équilibrage n'est mis en œuvre, est si besoin dévié par le système d'équilibrage 40 lors de la phase mixte. Plus particulièrement, lorsque le système d'équilibrage 40 est activé, il dévie une partie du courant destiné à alimenter le module de batterie 1A, 1B en surcharge pour alimenter davantage le module de batterie 1A, 1B en sous-charge, notamment parce que ce dernier est simultanément déchargé dans le circuit consommateur 4. L'équilibrage est dit « dynamique » dans la mesure où, d'une part, il peut être réalisé alors que les modules de batterie 1A, 1B sont en cours de charge et de décharge, et, d'autre part, il ne perturbe pas la charge et la décharge desdits modules de batterie 1A, 1B.

Le système d'équilibrage 40 comporte au moins une unité d'équilibrage principale 41 disposée en dérivation d'une partie d'une branche du circuit électrique 10 qui relie les deux bornes positives de deux modules de batterie 1A, 1B distincts.

Comme le montre la figure 1, l'unité d'équilibrage principale 41 comporte ici un commutateur 410 monté en série avec une bobine L1 et en parallèle avec une diode D1. La diode D1 protège ledit commutateur 410 d'une éventuelle surtension. Ici, le commutateur 410 de l'unité d'équilibrage principale 41 est un transistor de puissance.

Dans l'exemple de la figure 1, l'unité d'équilibrage principale 41 du système d'équilibrage 40 est disposée sur la branche électrique connectant la borne positive du premier module de batterie 1A et la borne d'entrée de courant dans la deuxième diode DB. La borne d'entrée de courant de la diode D1 de ladite unité d'équilibrage principale 41 est connectée à la borne de sortie de courant de la première diode DA.

Dans l'exemple de la figure 1, l'unité d'équilibrage principale 41 permet, lorsque le commutateur 410 est fermé, de transférer une partie du courant de charge Ic provenant du chargeur 2, normalement destiné à recharger le premier module de batterie 1A, en direction du deuxième module de batterie 1B qui est quant à lui en sous charge par rapport audit premier module de batterie 1A car en train d'être déchargé dans le circuit consommateur 4.

Lors de la fermeture du commutateur 410, une rampe de courant apparaît dans la branche du circuit électrique 10 qui porte la bobine L1. Plus la durée de fermeture du commutateur 410 est longue, plus la quantité de courant transférée dans l'unité d'équilibrage principale 41, en direction du deuxième module de batterie 1B, est élevée. Pour faire un équilibrage précis et fin, il convient de piloter l'ouverture et la fermeture du commutateur 410 à une fréquence de l'ordre de 50kHz.

La diode D1 de l'unité d'équilibrage principale 41 permet de protéger le commutateur 410 lors de son ouverture. Lors de l'ouverture du commutateur 410, du courant continue à circuler dans l'unité d'équilibrage principale 41 du fait de la bobine L1. La diode D1 dite de « roue-libre » autorise une partie de ce courant à circuler en direction de la borne positive du premier module de batterie 1A, lors de l'ouverture du commutateur 410, et évite ainsi audit commutateur 410 de griller.

La durée de fermeture du commutateur 410 de l'unité d'équilibrage principale 41 est pilotée par une modulation en largeur d'impulsion. La largeur des impulsions du pilotage est modulée en fonction, d'une part, de la tension d'alimentation Va détectée aux bornes des modules de batterie 1A, 1B à équilibrer, et, d'autre part, du courant de charge Ic provenant du chargeur 2.

Ici, c'est l'unité de commande 5 qui pilote les impulsions d'ouverture et de fermeture du commutateur 410 de l'unité d'équilibrage principale 41 du système d'équilibrage 40.

Pour permettre un équilibrage des modules de batterie 1A, 1B dans les deux sens, c'est-à-dire, d'une part, depuis un premier des modules de batterie 1A, 1B qui est en surcharge vers un deuxième des modules de batterie 1A, 1B qui est en sous charge, et, d'autre part, depuis ledit deuxième des modules de batterie qui serait passé en surcharge en cours de fonctionnement vers ledit premier des modules de batterie 1A, 1B quant à lui passé en sous-charge, le système d'équilibrage 40 comporte aussi une unité d'équilibrage secondaire 42 disposée en dérivation d'une partie d'une branche du circuit électrique 10 qui relie les deux bornes négatives desdits deux modules de batterie 1A, 1B distincts.

Comme le montre la figure 1, l'unité d'équilibrage secondaire 42 est ici analogue à l'unité d'équilibrage principale 41. Elle comporte un commutateur 420 monté en série avec une bobine L2 et en parallèle avec une diode D2. La diode D2 protège ledit commutateur 420 d'une éventuelle surtension. Ici, le commutateur 420 de l'unité d'équilibrage secondaire 42 est un transistor de puissance.

Dans l'exemple de la figure 1, l'unité d'équilibrage secondaire 42 du système d'équilibrage 40 est disposée sur la branche électrique du circuit électrique 10 connectant la borne négative du deuxième module de batterie 1B et la borne d'entrée de courant de la deuxième diode DB. La borne de sortie de courant de la diode D2 de ladite unité d'équilibrage secondaire 42 est connectée à la borne de sortie de courant de la première diode DA.

Dans l'exemple de la figure 1, grâce à un fonctionnement analogue à celui décrit pour l'unité d'équilibrage principale 41, l'unité d'équilibrage secondaire 42 permet, lorsque le commutateur 420 est fermé, de transférer une partie du courant destiné à recharger le deuxième module de batterie 1B, alors en surcharge, en direction du premier module de batterie 1A qui est quant à lui en sous-charge par rapport au deuxième module de batterie 1B.

L'unité de commande 5 pilote aussi les impulsions de fermeture et d'ouverture du commutateur 420 de l'unité d'équilibrage secondaire 42 du système d'équilibrage 40. La largeur des impulsions est modulée en fonction, d'une part, de la tension aux bornes des modules de batterie 1A, 1B à équilibrer, et, d'autre part, du courant de charge Ic provenant du chargeur 2.

L'inductance de la bobine L1 et la caractéristique de la diode D1, tout comme l'inductance de la bobine L2 et la caractéristique de la diode D2 sont fixées une fois pour toute, en fonction de la puissance de la batterie 1 et d'une valeur de déséquilibre maximal toléré de tension d'alimentation Va aux bornes des modules de batterie 1A, 1B. L'inductance de la bobine L2 n'est pas nécessairement identique à celle de la bobine L1, de même que les caractéristiques des diodes D1 et D2 ne sont pas nécessairement identiques.

Lorsque le système d'équilibrage 40 est activé, l'unité de commande 5 ne pilote jamais la fermeture simultanée des commutateurs 410, 420 des unités d'équilibrage principale et secondaire 41, 42. Au contraire, l'unité de commande 5 pilote la fermeture en alternance desdits commutateurs 410, 420. Lorsque le système d'équilibrage 40 est désactivé, les commutateurs 410, 420 des unités d'équilibrage principale et secondaire 41, 42 sont ouverts simultanément.

Avantageusement, le système d'équilibrage 40 décrit précédemment est aussi adapté à modifier le circuit électrique 10 pour dévier une partie du courant délivré en direction d'un des modules de batterie 1A, 1B en surcharge vers un autre des modules de batterie 1A, 1B en sous charge, lors d'une phase transitoire de la batterie 1 postérieure à la phase de charge mais préalable à la phase de décharge de ladite batterie 1.

La phase transitoire de fonctionnement est la phase qui se produit à la fin de la charge de la batterie 1, et avant que le circuit électrique 10 ne soit configuré pour la phase de décharge de la batterie 1.

Lors de la phase transitoire de fonctionnement de la batterie 1, les commutateurs 31, 32, 33, 34, 35, 36 de l'unité de commutation 3 sont pilotés pour déconnecter, d'une part, la borne positive de la batterie 1 et la borne positive du chargeur 2, et, d'autre part, la borne négative de la batterie 1 et la borne négative du chargeur 2. Lors de la phase transitoire, les modules de batterie 1A, 1B ne sont pas encore mis en parallèle dans le circuit électrique 10.

Dans l'exemple de la figure 1, lors de la phase transitoire de la batterie 1, les premier et deuxième commutateurs 31, 32 sont donc ouverts, tout comme les cinquième et sixième commutateurs 35, 36. Les troisième et quatrième commutateurs 33, 34 sont ouverts également.

Lorsque les premier et deuxième commutateurs 31, 32 sont ouverts à la fin de la phase de charge de la batterie 1 ou à la fin de la phase mixte de la batterie 1, il arrive que les deux modules de batterie 1A, 1B pourtant équilibrés dynamiquement par le système d'équilibrage 40, ne soient pas tout à fait au même niveau de charge, et donc ne soient pas capables de délivrer la même tension d'alimentation Va nominale entre leurs bornes. Le système d'équilibrage 40 permet de remédier à ce déséquilibre et l'unité de commande 5 pilote les impulsions de fermeture et d'ouverture, et l'alternance entre les commutateurs 410, 420 des unités d'équilibrage principale et secondaire 41, 42 jusqu'à ce que l'équilibre soit rétabli.

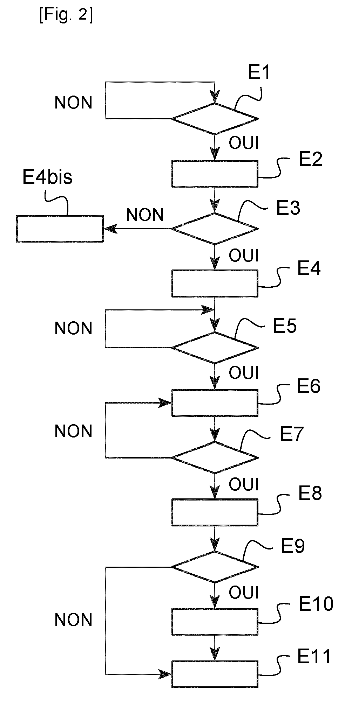

Sur la figure 2, on a représenté les étapes principales d'un exemple de procédé de commande de la batterie 1 décrite précédemment.

Selon le procédé de commande de l'invention, il est prévu que l'unité de commande 5:
- pilote les commutateurs 31, 32, 33, 34, 35, 36 de l'unité de commutation 3 pour connecter lesdits modules de batterie 1A, 1B en série les uns avec les autres, lors de la phase de charge de ladite batterie 1 par le chargeur 2 ; et,
- pilote le système d'équilibrage 40 de l'unité de commutation 3 pour dévier une partie du courant délivré en direction d'un des modules de batterie 1A, 1B en surcharge vers un autre des modules de batterie 1A, 1B en sous charge, lors de la phase mixte au cours de laquelle la batterie 1 est simultanément chargée par le chargeur 2 et déchargée vers ledit circuit consommateur 4.

L'unité de commande 5 pilote en outre, lors de la phase mixte, les commutateurs 31, 32, 33, 34, 35, 36 de l'unité de commutation 3 pour connecter lesdits modules de batterie 1A, 1B en série tout en connectant le circuit consommateur aux bornes d'au moins un des modules de batterie 1A, 1B. Plus précisément, comme le montre la figure 2, l'unité de commande 5 détermine lors d'une étape E1 si le chargeur 2 est branché sur le circuit électrique 10. Si le chargeur n'est pas branché sur le circuit, l'unité de commande 5 réitère l'étape E1 jusqu'à ce que le chargeur 2 soit branché sur le circuit électrique 10.

Si le chargeur 2 est branché sur le circuit électrique 20, l'unité de commande 5 pilote, au cours d'une étape E2, les commutateurs 31, 32, 33, 34, 35, 36 de l'unité de commutation 3 pour connecter lesdits modules de batterie 1A, 1B en série les uns avec les autres. Le circuit électrique 10 adopte alors la configuration associée à la phase de charge de la batterie 1 décrite précédemment.

Lors d'une étape E3, l'unité de commande 5 détermine ensuite si les organes du véhicule raccordés au circuit consommateur 4 sont actifs ou activés par un utilisateur du véhicule.

Si aucun organe du véhicule n'est actif, la charge de la batterie 1 se déroule selon un procédé connu classique, qui est indiqué par l'étape E4bis de la figure 2. Selon ce procédé connu, les cellules électrochimiques sont surveillées au moyen d'un capteur de tension cellulaire (acronyme CVS pour « *Cell Voltage* Sensor » en langue anglaise) pour que, dès que l'une d'elle atteint une tension supérieure à celle des autres cellules électrochimiques d'un même module de batterie, celle-ci se décharge dans une résistance.

En revanche, si au moins un organe du véhicule est actif, ou dès que l'unité de commande 5 détecte qu'un organe du véhicule est activé, le circuit consommateur 4 est connecté à la batterie 1 (étape E4 de la figure 2). Au cours de cette étape E4, l'unité de commande 5 pilote les commutateurs 31, 32, 33, 34, 35, 36 de l'unité de commutation 3 pour connecter le circuit consommateur 4 aux bornes d'au moins un des modules de batterie 1A, 1B. Le circuit électrique 10 adopte alors la configuration associée à la phase mixte de fonctionnement de la batterie 1 décrite précédemment. Lors d'une étape E5, l'unité de commande 5 détermine ensuite si les modules de batterie 1A, 1B sont en déséquilibre de charge. Pour se faire, l'unité de commande 5 détermine la tension d'alimentation Va aux bornes de chaque module de batterie 1A, 1B, à l'aide d'une unité de détection de tension (non représentée).

Si aucun déséquilibre n'est détecté par l'unité de commande 5, l'unité de commande 5 réitère l'étape E5 jusqu'à ce qu'un déséquilibre soit détecté.

Lorsqu'un déséquilibre est détecté par l'unité de commande 5, cette dernière pilote, au cours d'une étape E6, le système d'équilibrage 40 de l'unité de commutation 3 pour dévier une partie du courant normalement destiné à alimenter un des modules de batterie 1A, 1B en surcharge vers un autre des modules de batterie 1A, 1B en sous charge. A cette étape E6, l'unité de commande 5 pilote l'activation du système d'équilibrage 40 et, plus particulièrement, la durée de fermeture et d'ouverture des commutateurs 410, 420 du système d'équilibrage 40, en modulation de largeur d'impulsion, ainsi que l'alternance de fermeture entre lesdits commutateurs 410, 420.

Lors d'une étape E7, l'unité de commande 5 détermine si le rééquilibrage de charge des modules de batterie 1A, 1B est terminé. Si ce n'est pas le cas, c'est-à-dire au cas où l'unité de commande 5 détermine que les tensions d'alimentation Va aux bornes des modules de batterie 1A, 1B sont différentes, l'unité de commande 5 répète l'étape E6 décrite précédemment.

Si, au contraire, l'unité de commande 5 détermine que le rééquilibrage est terminé, c'est-à-dire que les tensions d'alimentation Va aux bornes des modules de batterie 1A, 1B sont globalement égales, l'unité de commande 5 pilote, au cours d'une étape E8, les commutateurs 31, 32, 33, 34, 35, 36 de l'unité de commutation 3 pour déconnecter le chargeur 2. En pratique, l'unité de commande 5 pilote l'ouverture, lors de l'étape E8, des premier et deuxième commutateurs 31, 32. Le circuit électrique 10 adopte alors la configuration associée à la phase transitoire de la batterie 1 décrite précédemment.

Lors d'une étape E9, l'unité de commande 5 détermine ensuite à nouveau si les modules de batterie 1A, 1B ont été déséquilibrés par l'ouverture desdites premier et deuxième commutateurs 31, 32.

Si l'unité de commande 5 détecte un déséquilibre, l'unité de commande 5 pilote à nouveau, au cours d'une étape E10, l'activation du système d'équilibrage 40 d'une manière analogue à celle décrite pour l'étape E6.

Une fois que les tensions d'alimentation Va aux bornes des modules de batterie 1A, 1B sont égales, l'unité de commande 5 pilote, au cours d'une étape E11 les commutateurs 31, 32, 33, 34, 35, 36 de l'unité de commutation 3 pour connecter lesdits modules de batterie 1A, 1B en parallèle les uns des autres.

Le circuit électrique 10 adopte alors la configuration associée à la phase de décharge de la batterie 1 décrite précédemment. Le système d'équilibrage 40 est alors désactivé, c'est-à-dire que les commutateurs 410, 420 sont laissés ouverts.

Lorsque, à l'étape E9, l'unité de commande 5 ne détecte aucun déséquilibre, l'unité de commande 5 met directement en œuvre l'étape E11 décrite ci-dessus.

Ainsi, grâce à la batterie 1 selon l'invention et à son procédé de commande, il est possible de recharger la batterie 1 en même temps qu'elle est utilisée. Par exemple, avec deux modules de batterie 1A, 1B identiques de 40kiloWatt-heure (kWh) chacun, capable de délivrer une tension nominale de 400 Volts chacun lorsqu'ils sont chargés au maximum, et deux bobines L1 et L2 de 200 microHenry (µH), si un déséquilibre de 30 Volts apparaît entre lesdits modules de batterie 1A, 1B, le système d'équilibrage 40 selon l'invention est capable de dévier jusqu'à 10 Ampères (A) de courant vers le module en sous-charge, pour compenser ce déséquilibre. En pratique, un tel déséquilibre de 30V entre deux modules de batterie 1A, 1B n'est jamais atteint car lesdits modules de batteries 1A, 1B sont rééquilibrés en dynamique, c'est-à-dire au fur et à mesure de leur dérive. Ainsi, le système d'équilibrage 40 dévie en général des courants beaucoup plus faibles de l'un vers l'autre desdits modules de batterie 1A, 1B.

La présente invention n'est nullement limitée aux modes de réalisation décrits et représentés, mais l'homme du métier saura y apporter toute variante conforme à l'invention.

Notamment, la batterie pourrait contenir plus de deux modules de batterie. Les modules de batterie pourraient aussi présenter une capacité de stockage différente, auquel cas le circuit électrique et les différentes configurations qu'il est susceptible d'adopter sont adaptés en conséquence.

## Revendications

1. Batterie (1) de stockage d'énergie électrique comportant :
- une pluralité de modules de batterie (1A, 1B) connectés électriquement par l'intermédiaire d'un circuit électrique (10), chaque module de batterie (1A, 1B) étant adapté à stocker de l'énergie électrique, et
- une unité de commutation (3) qui comprend une pluralité de commutateurs (31, 32, 33, 34, 35, 36) disposés sur le circuit électrique (10) et adaptés à connecter les modules de batterie (1A, 1B) en série dans le circuit électrique (10) lors d'une phase de charge de la batterie (1) par un chargeur (2),
**caractérisée en ce que** l'unité de commutation (3) comprend en outre un système d'équilibrage (40) de la charge des modules de batterie (1A, 1B), disposé sur le circuit électrique (10) et adapté à modifier le circuit électrique (10) pour dévier une partie du courant délivré en direction d'un des modules de batterie (1A, 1B) en surcharge vers un autre des modules de batterie (1A, 1B) en sous-charge, lors d'une phase mixte au cours de laquelle la batterie (1) est simultanément chargée par le chargeur (2) et déchargée vers un circuit consommateur (4) que ladite batterie (1) alimente en énergie électrique et au cours de laquelle les commutateurs (31, 32, 33, 34, 35, 36) de l'unité de commutation (3) sont adaptés à connecter les modules de batterie (1A, 1B) en série sur le circuit électrique (10) tout en connectant le circuit consommateur (4) aux bornes d'au moins un des modules de batterie (1A, 1B).

2. Batterie (1) selon la revendication 1, dans laquelle le circuit consommateur (4) est connecté aux bornes d'un seul des modules (1A, 1B).

3. Batterie (1) selon l'une des revendications 1 et 2, dans laquelle les commutateurs (31, 32, 33, 34, 35, 36) de l'unité de commutation (3) sont en outre adaptés à connecter lesdits modules de batterie (1A, 1B) en parallèle dans le circuit électrique (10) lors d'une phase de décharge de la batterie (1) dans le circuit consommateur (4), et le système d'équilibrage (40) est adapté à modifier le circuit électrique (10) pour transférer une partie du courant alimentant un des modules de batterie (1A, 1B) en surcharge vers un autre des modules de batterie (1A, 1B) en sous charge lors d'une phase transitoire postérieure à ladite phase de charge mais préalable à ladite phase de décharge de la batterie (1).

4. Batterie (1) selon l'une des revendications 1 à 3, dans laquelle le système d'équilibrage (40) comporte au moins une unité d'équilibrage principale (41) disposée en dérivation d'une partie d'une branche du circuit électrique (10) reliant les deux bornes positives de deux modules de batterie (1A, 1B) distincts, ladite unité d'équilibrage principale (41) comportant un commutateur (410) monté en série avec une bobine (L1) et en parallèle avec une diode (D1).

5. Batterie (1) selon la revendication 4, dans laquelle la durée de fermeture du commutateur (410) de ladite unité d'équilibrage principale (41) est pilotée par une modulation en largeur d'impulsion, en fonction de la tension d'alimentation (Va) aux bornes des modules de batterie (1A, 1B) à équilibrer et du courant de charge (Ic) provenant du chargeur (2).

6. Batterie (1) selon l'une des revendications 4 et 5, dans laquelle le système d'équilibrage (40) comporte au moins une unité d'équilibrage secondaire (42) disposée en dérivation d'une partie d'une branche du circuit électrique (10) reliant les deux bornes négatives desdits deux modules de batterie (1A, 1B) distincts, et comportant un commutateur (420) monté en série avec une bobine (L2) et en parallèle avec une diode (D2).

7. Batterie (1) selon l'une des revendications 4 à 6, dans laquelle le commutateur (410, 420) de chaque unité d'équilibrage (41, 42) est un transistor de puissance.

8. Batterie (1) selon l'une quelconque des revendications 4 à 7, dans laquelle il est prévu un premier module de batterie (1A) dont une borne négative est connectée à une borne positive d'un deuxième module de batterie (1B) par l'intermédiaire d'une première et d'une deuxième diodes (DA, DB) connectées en série l'une de l'autre, la borne d'entrée de courant de la première diode (DA) étant connectée à la borne négative du premier module de batterie (1A), et la borne de sortie de courant de la deuxième diode (DB) étant connectée à la borne positive du deuxième module de batterie (1B) ;
dans laquelle l'unité de commutation (3) comporte :
- un premier commutateur (31) présentant un premier point de contact destiné à être connecté à une borne positive du chargeur (2) et un deuxième point de contact connecté à la borne positive du premier module de batterie (1A),
- un deuxième commutateur (32) présentant un premier point de contact destiné à être connecté à une borne négative du chargeur (2) et un deuxième point de contact connecté à la borne négative du deuxième module de batterie (1B),
- un troisième commutateur (33) présentant un premier point de contact connecté à la borne positive du deuxième module de batterie (1B) et un deuxième point de contact connecté à une borne du circuit consommateur (4),
- un quatrième commutateur (34) présentant un premier point de contact connecté à la borne négative du deuxième module de batterie (1B) et un deuxième point de contact connecté à l'autre borne du circuit consommateur (4),
- un cinquième commutateur (35) présentant un premier point de contact connecté à la borne positive du premier module de batterie (1A) et un deuxième point de contact connecté à la borne de sortie de courant de la deuxième diode (DB),
- un sixième commutateur (36) présentant un premier point de contact connecté à la borne négative du deuxième module de batterie (1B) et un deuxième point de contact connecté à la borne d'entrée de courant de la première diode (DA) ;
et dans laquelle l'unité d'équilibrage principale (41) du système d'équilibrage (40) est disposée sur la branche électrique connectant la borne positive du premier module de batterie (1A) et la borne d'entrée de courant dans la deuxième diode (DB), la borne d'entrée de courant de la diode (D1) de ladite unité d'équilibrage principale (41) étant connectée à la borne de sortie de courant de la première diode (DA).

9. Batterie selon la revendication 8 prise en combinaison avec la revendication 6, dans laquelle l'unité d'équilibrage secondaire (42) du système d'équilibrage (40) est disposée sur la branche électrique connectant la borne négative du deuxième module de batterie (1B) et la borne d'entrée de courant de la deuxième diode (DB), la borne de sortie de courant de la diode (D2) de ladite unité d'équilibrage secondaire (42) étant connectée à la borne de sortie de courant de la première diode (DA).

10. Procédé de commande d'une batterie (1) comportant une pluralité de modules de batterie (1A, 1B) connectés électriquement par l'intermédiaire d'un circuit électrique (10) au moyen d'une unité de commutation (3) qui comprend une pluralité de commutateurs (31, 32, 33, 34, 35, 36) ainsi qu'un système d'équilibrage (40) de la charge desdits modules de batterie (1A, 1B), selon lequel il est prévu qu'une unité de commande (5):
- pilote les commutateurs (31, 32, 33, 34, 35, 36) de l'unité de commutation (3) pour connecter lesdits modules de batterie (1A, 1B) en série les uns avec les autres, lors d'une phase de charge de ladite batterie (1) par un chargeur (2) ; et
- pilote le système d'équilibrage (40) de l'unité de commutation (3) pour dévier une partie du courant délivré en direction d'un des modules de batterie (1A, 1B) en surcharge vers un autre des modules de batterie (1A, 1B) en sous charge, lors d'une phase mixte au cours de laquelle la batterie (1) est simultanément chargée par le chargeur (2) et déchargée vers ledit circuit consommateur (4) et au cours de laquelle les commutateurs (31, 32, 33, 34, 35, 36) de l'unité de commutation (3) sont adaptés à connecter les modules de batterie (1A, 1B) en série sur le circuit électrique (10) tout en connectant le circuit consommateur (4) aux bornes d'au moins un des modules de batterie (1A, 1B).

## Patentansprüche

1. Batterie (1) zur Speicherung elektrischer Energie, umfassend:
- eine Mehrzahl von Batteriemodulen (1A, 1B), die über eine elektrische Schaltung (10) elektrisch verbunden sind, wobei jedes Batteriemodul (1A, 1B) dazu ausgelegt ist, elektrische Energie zu speichern, und
- eine Schalteinheit (3), die eine Mehrzahl von Schaltern (31, 32, 33, 34, 35, 36) umfasst, die in der elektrischen Schaltung (10) angeordnet sind und dazu ausgelegt sind, die Batteriemodule (1A, 1B) in der elektrischen Schaltung (10) während einer Phase des Ladens der Batterie (1) durch ein Ladegerät (2) in Reihe zu verbinden,
**dadurch gekennzeichnet, dass** die Schalteinheit (3) ferner ein Ausgleichssystem (40) zum Ausgleichen der Ladung der Batteriemodule (1A, 1B) umfasst, das in der elektrischen Schaltung (10) angeordnet ist und dazu ausgelegt ist, die elektrische Schaltung (10) zu ändern, um einen Teil des Stroms, der in Richtung eines der überladenen Batteriemodule (1A, 1B) abgegeben wird, zu einem anderen der unterladenen Batteriemodule (1A, 1B) umzuleiten während einer gemischten Phase, in der die Batterie (1) gleichzeitig durch das Ladegerät (2) geladen wird und zu einem von der Batterie (1) mit elektrischer Energie versorgten Verbraucherkreis (4) entladen wird und in der die Schalter (31, 32, 33, 34, 35, 36) der Schalteinheit (3) dazu ausgelegt sind, die Batteriemodule (1A, 1B) in der elektrischen Schaltung (10) in Reihe zu verbinden und dabei den Verbraucherkreis (4) mit den Klemmen mindestens eines der Batteriemodule (1A, 1B) zu verbinden.

2. Batterie (1) nach Anspruch 1, wobei der Verbraucherkreis (4) mit den Klemmen nur eines der Module (1A, 1B) verbunden ist.

3. Batterie (1) nach einem der Ansprüche 1 und 2, wobei die Schalter (31, 32, 33, 34, 35, 36) der Schalteinheit (3) ferner dazu ausgelegt sind, die Batteriemodule (1A, 1B) in der elektrischen Schaltung (10) während einer Phase des Entladens der Batterie (1) in den Verbraucherkreis (4) parallel zu verbinden, und das Ausgleichssystem (40) dazu ausgelegt ist, die elektrische Schaltung (10) zu ändern, um einen Teil des Stroms, der eines der überladenen Batteriemodule (1A, 1B) versorgt, zu einem anderen der unterladenen Batteriemodule (1A, 1B) zu transferieren während einer Übergangsphase nach der Ladephase, aber vor der Entladephase der Batterie (1).

4. Batterie (1) nach einem der Ansprüche 1 bis 3, wobei das Ausgleichssystem (40) mindestens eine Hauptausgleichseinheit (41) umfasst, die abzweigend von einem Teil eines Zweigs der elektrischen Schaltung (10) angeordnet ist, der die beiden Plusklemmen von zwei verschiedenen Batteriemodulen (1A, 1B) verbindet, wobei die Hauptausgleichseinheit (41) einen Schalter (410) umfasst, der in Reihe mit einer Spule (L1) und parallel zu einer Diode (D1) geschaltet ist.

5. Batterie (1) nach Anspruch 4, wobei die Schließdauer des Schalters (410) der Hauptausgleichseinheit (41) durch eine Pulsweitenmodulation gesteuert wird, in Abhängigkeit von der Versorgungsspannung (Va) an den Klemmen der auszugleichenden Batteriemodule (1A, 1B) und von dem aus dem Ladegerät (2) kommenden Ladestrom (Ic).

6. Batterie (1) nach einem der Ansprüche 4 und 5, wobei das Ausgleichssystem (40) mindestens eine sekundäre Ausgleichseinheit (42) umfasst, die abzweigend von einem Teil eines Zweigs der elektrischen Schaltung (10) angeordnet ist, der die beiden Minusklemmen der beiden verschiedenen Batteriemodule (1A, 1B) verbindet, und einen Schalter (420) umfasst, der in Reihe mit einer Spule (L2) und parallel zu einer Diode (D2) geschaltet ist.

7. Batterie (1) nach einem der Ansprüche 4 bis 6, wobei der Schalter (410, 420) jeder Ausgleichseinheit (41, 42) ein Leistungstransistor ist.

8. Batterie (1) nach einem der Ansprüche 4 bis 7, wobei ein erstes Batteriemodul (1A) vorgesehen ist, dessen eine Minusklemme mit einer Plusklemme eines zweiten Batteriemoduls (1B) über eine erste und eine zweite Diode (DA, DB) verbunden ist, die in Reihe zueinander verbunden sind, wobei die Stromeingangsklemme der ersten Diode (DA) mit der Minusklemme des ersten Batteriemoduls (1A) verbunden ist und wobei die Stromausgangsklemme der zweiten Diode (DB) mit der Plusklemme des zweiten Batteriemoduls (1B) verbunden ist;
wobei die Schalteinheit (3) Folgendes umfasst:
- einen ersten Schalter (31), der einen ersten Kontaktpunkt aufweist, der dazu bestimmt ist, mit einer Plusklemme des Ladegeräts (2) verbunden zu werden, und einen zweiten Kontaktpunkt, der mit der Plusklemme des ersten Batteriemoduls (1A) verbunden ist,
- einen zweiten Schalter (32), der einen ersten Kontaktpunkt aufweist, der dazu bestimmt ist, mit einer Minusklemme des Ladegeräts (2) verbunden zu werden, und einen zweiten Kontaktpunkt, der mit der Minusklemme des zweiten Batteriemoduls (1B) verbunden ist,
- einen dritten Schalter (33), der einen ersten Kontaktpunkt aufweist, der mit der Plusklemme des zweiten Batteriemoduls (1B) verbunden ist, und einen zweiten Kontaktpunkt, der mit einer Klemme des Verbraucherkreises (4) verbunden ist,
- einen vierten Schalter (34), der einen ersten Kontaktpunkt aufweist, der mit der Minusklemme des zweiten Batteriemoduls (1B) verbunden ist, und einen zweiten Kontaktpunkt, der mit der anderen Klemme des Verbraucherkreises (4) verbunden ist,
- einen fünften Schalter (35), der einen ersten Kontaktpunkt aufweist, der mit der Plusklemme des ersten Batteriemoduls (1A) verbunden ist, und einen zweiten Kontaktpunkt, der mit der Stromausgangsklemme der zweiten Diode (DB) verbunden ist,
- einen sechsten Schalter (36), der einen ersten Kontaktpunkt aufweist, der mit der Minusklemme des zweiten Batteriemoduls (1B) verbunden ist, und einen zweiten Kontaktpunkt, der mit der Stromeingangsklemme der ersten Diode (DA) verbunden ist;
und wobei die Hauptausgleichseinheit (41) des Ausgleichssystems (40) in dem elektrischen Zweig angeordnet ist, der die Plusklemme des ersten Batteriemoduls (1A) und die Stromeingangsklemme in der zweiten Diode (DB) verbindet, wobei die Stromeingangsklemme der Diode (D1) der Hauptausgleicheinheit (41) mit der Stromausgangsklemme der ersten Diode (DA) verbunden ist.

9. Batterie nach Anspruch 8 in Kombination mit Anspruch 6, wobei die sekundäre Ausgleicheinheit (42) des Ausgleichssystems (40) in dem elektrischen Zweig angeordnet ist, der die Minusklemme des zweiten Batteriemoduls (1B) und die Stromeingangsklemme der zweiten Diode (DB) verbindet, wobei die Stromausgangsklemme der Diode (D2) der sekundären Ausgleicheinheit (42) mit der Stromausgangsklemme der ersten Diode (DA) verbunden ist.

10. Verfahren zum Steuern einer Batterie (1), die eine Mehrzahl von Batteriemodulen (1A, 1B) umfasst, die über eine elektrische Schaltung (10) mittels einer Schalteinheit (3) elektrisch verbunden sind, die eine Mehrzahl von Schaltern (31, 32, 33, 34, 35, 36) sowie ein Ausgleichssystem (40) zum Ausgleichen der Ladung der Batteriemodule (1A, 1B) umfasst, gemäß dem vorgesehen ist, dass eine Steuereinheit (5):
- die Schalter (31, 32, 33, 34, 35, 36) der Schalteinheit (3) steuert, um die Batteriemodule (1A, 1B) während einer Phase des Ladens der Batterie (1) durch ein Ladegerät (2) in Reihe zueinander zu verbinden; und
- das Ausgleichssystem (40) der Schalteinheit (3) steuert, um einen Teil des Stroms, der in Richtung eines der überladenen Batteriemodule (1A, 1B) abgegeben wird, zu einem anderen der unterladenen Batteriemodule (1A, 1B) umzuleiten während einer gemischten Phase, in der die Batterie (1) gleichzeitig durch das Ladegerät (2) geladen wird und zu dem Verbraucherkreis (4) entladen wird und in der die Schalter (31, 32, 33, 34, 35, 36) der Schalteinheit (3) dazu ausgelegt sind, die Batteriemodule (1A, 1B) in der elektrischen Schaltung (10) in Reihe zu verbinden und dabei den Verbraucherkreis (4) mit den Klemmen mindestens eines der Batteriemodule (1A, 1B) zu verbinden.

## Claims

1. Battery (1) for storing electrical energy comprising:
- a plurality of battery modules (1A, 1B) which are electrically connected via an electrical circuit (10), each battery module (1A, 1B) being adapted to store electrical energy, and
- a switching unit (3) which comprises a plurality of switches (31, 32, 33, 34, 35, 36) which are arranged on the electrical circuit (10) and adapted to connect the battery modules (1A, 1B) in series in the electrical circuit (10) during a phase of charging the battery (1) by means of a charger (2),
**characterized in that** the switching unit (3) further comprises a system (40) for balancing the charge of the battery modules (1A, 1B), which is arranged on the electrical circuit (10) and adapted to modify the electrical circuit (10) in order to divert some of the current delivered in the direction of one of the battery modules (1A, 1B), which is overcharged, to another of the battery modules (1A, 1B), which is undercharged, during a mixed phase during which the battery (1) is simultaneously charged by the charger (2) and discharged to a consumer circuit (4) which said battery (1) supplies with electrical energy and during which the switches (31, 32, 33, 34, 35, 36) of the switching unit (3) are adapted to connect the battery modules (1A, 1B) in series on the electrical circuit (10) while at the same time connecting the consumer circuit (4) to the terminals of at least one of the battery modules (1A, 1B).

2. Battery (1) according to Claim 1, wherein the consumer circuit (4) is connected to the terminals of only one of the modules (1A, 1B).

3. Battery (1) according to one of Claims 1 and 2, wherein the switches (31, 32, 33, 34, 35, 36) of the switching unit (3) are further adapted to connect said battery modules (1A, 1B) in parallel in the electrical circuit (10) during a phase of discharging the battery (1) into the consumer circuit (4), and the balancing system (40) is adapted to modify the electrical circuit (10) in order to transfer some of the current supplying power to one of the battery modules (1A, 1B), which is overcharged, to another of the battery modules (1A, 1B), which is undercharged, during a transient phase which is subsequent to said phase of charging but prior to said phase of discharging the battery (1).

4. Battery (1) according to one of Claims 1 to 3, wherein the balancing system (40) comprises at least one main balancing unit (41) arranged as a branch from part of a branch of the electrical circuit (10) connecting the two positive terminals of two distinct battery modules (1A, 1B), said main balancing unit (41) comprising a switch (410) connected in series with a coil (L1) and in parallel with a diode (D1).

5. Battery (1) according to Claim 4, wherein the period of closure of the switch (410) of said main balancing unit (41) is controlled by pulse-width modulation, depending on the supply voltage (Va) across the terminals of the battery modules (1A, 1B) to be balanced and on the charging current (Ic) coming from the charger (2).

6. Battery (1) according to one of Claims 4 and 5, wherein the balancing system (40) comprises at least one secondary balancing unit (42) arranged as a branch from part of a branch of the electrical circuit (10) connecting the two negative terminals of said two distinct battery modules (1A, 1B), and comprising a switch (420) connected in series with a coil (L2) and in parallel with a diode (D2).

7. Battery (1) according to one of Claims 4 to 6, wherein the switch (410, 420) of each balancing unit (41, 42) is a power transistor.

8. Battery (1) according to any one of Claims 4 to 7, wherein a first battery module (1A) is provided, a negative terminal of which is connected to a positive terminal of a second battery module (1B) via a first and a second diode (DA, DB) connected in series with one another, the current input terminal of the first diode (DA) being connected to the negative terminal of the first battery module (1A), and the current output terminal of the second diode (DB) being connected to the positive terminal of the second battery module (1B); wherein the switching unit (3) comprises:
- a first switch (31) having a first contact point intended to be connected to a positive terminal of the charger (2) and a second contact point connected to the positive terminal of the first battery module (1A),
- a second switch (32) having a first contact point intended to be connected to a negative terminal of the charger (2) and a second contact point connected to the negative terminal of the second battery module (1B),
- a third switch (33) having a first contact point connected to the positive terminal of the second battery module (1B) and a second contact point connected to one terminal of the consumer circuit (4),
- a fourth switch (34) having a first contact point connected to the negative terminal of the second battery module (1B) and a second contact point connected to the other terminal of the consumer circuit (4),
- a fifth switch (35) having a first contact point connected to the positive terminal of the first battery module (1A) and a second contact point connected to the current output terminal of the second diode (DB),
- a sixth switch (36) having a first contact point connected to the negative terminal of the second battery module (1B) and a second contact point connected to the current input terminal of the first diode (DA);
and wherein the main balancing unit (41) of the balancing system (40) is arranged on the electrical branch connecting the positive terminal of the first battery module (1A) and the current input terminal in the second diode (DB), the current input terminal of the diode (D1) of said main balancing unit (41) being connected to the current output terminal of the first diode (DA).

9. Battery according to Claim 8 in combination with Claim 6, wherein the secondary balancing unit (42) of the balancing system (40) is arranged on the electrical branch connecting the negative terminal of the second battery module (1B) and the current input terminal of the second diode (DB), the current output terminal of the diode (D2) of said secondary balancing unit (42) being connected to the current output terminal of the first diode (DA).

10. Method for controlling a battery (1) comprising a plurality of battery modules (1A, 1B) which are electrically connected via an electrical circuit (10) by means of a switching unit (3) which comprises a plurality of switches (31, 32, 33, 34, 35, 36) as well as a system (40) for balancing the charge of said battery modules (1A, 1B), according to which provision is made for a control unit (5) to:
- control the switches (31, 32, 33, 34, 35, 36) of the switching unit (3) in order to connect said battery modules (1A, 1B) in series with one another, during a phase of charging said battery (1) by means of a charger (2); and
- control the balancing system (40) of the switching unit (3) in order to divert some of the current delivered in the direction of one of the battery modules (1A, 1B), which is overcharged, to another of the battery modules (1A, 1B), which is undercharged, during a mixed phase during which the battery (1) is simultaneously charged by the charger (2) and discharged to said consumer circuit (4) and during which the switches (31, 32, 33, 34, 35, 36) of the switching unit (3) are adapted to connect the battery modules (1A, 1B) in series on the electrical circuit (10) while at the same time connecting the consumer circuit (4) to the terminals of at least one of the battery modules (1A, 1B).
